# EUROPEAN PATENT APPLICATION

(11) **EP 4 621 753 A1**
(43) Date of publication of application: **24.09.2025**
(21) Application number: 24165315.3
(22) Date of filing: 21.03.2024
(51) Int. Cl.: G08G 1/16, H04W 4/02, G08G 1/01, G08G 1/0967

(54) **A METHOD OF PREVENTING MOVING ENTITIES FROM COLLIDING**

(71) Applicant: Deutsche Telekom AG, 53113 Bonn (DE)
(72) Inventor: VAN DEN BERGE, Fridtjof, 53227 Bonn-Oberkassel (DE)
(74) Representative: RDL Patentanwälte PartG mbB

(57) **Abstract**

A method for preventing moving entities from colliding, wherein a source device moving with a first entity wirelessly transmits an exploration message and wirelessly receives a disclosure message indicating current positions of target devices moving with second entities, and a computer program product.

## Description

The invention relates to a method for preventing moving entities from colliding, wherein a source device moving with a first entity wirelessly transmits an exploration message and wirelessly receives a disclosure message indicating current positions of target devices moving with second entities. The invention further relates to a computer program product.

Many car accidents occur as eventual collision partners are not in time perceived by drivers of cars. The late perception is often caused by visual obstacles hiding the collision partners from the drivers of the cars. The visual obstacles comprise cars parking along a road, bushes or trees along the road and buildings arranged close to the road, to name only a few. Collision partners comprise other cars, persons, particularly children, pets and the like.

In such a constellation, the time remaining from a first perception of a collision partner to a collision of a car with a collision partner is insufficient for spatially avoiding the collision. The remaining time depends, of course, on a reaction time of a driver of the car and several factors related to the movement and the surroundings of both the car and the collision partner.

As collisions usually cause serious damage both to the car and to the collision partner, reducing the risk of collisions is highly desired. It is emphasized that the invention is not restricted to cars and the exemplary collision partners listed above. Rather can any two moving entities collide due to visual obstacles hindering an early mutual perception.

It is, therefore, an object of the invention to suggest a method for preventing moving entities from colliding which reliably and early discloses potentially colliding second entities to a moving first entity. Another object of the invention is to provide a computer program product.

A first aspect of the invention is a method for preventing moving entities from colliding, wherein a source device moving with a first entity wirelessly transmits an exploration message and wirelessly receives a disclosure message indicating current positions of target devices moving with second entities. The source device is a mobile device, also called user equipment, UE, configured for a wireless communication, i.e., an over-the-air, OTA, communication. The source device is associated to the first entity and, hence, synchronously follows each movement of the first entity. A position of the source device substantially corresponds to a position of the first entity. The target device is associated to the second entity and, hence, synchronously follows each movement of the second entity. A position of the target device substantially corresponds to a position of the second entity.

According to the invention, the source device connected to a cellular network wirelessly transmits an exploration message to a cloud server connected to the cellular network, the exploration message indicating a current moving direction of the source device, the cloud server, upon receiving the transmitted exploration message, transmits the disclosure message to the source device when a current position of a target device connected to the cellular network and moving with the second entity is located within a sector about the indicated moving direction and a determined current distance of the target device from the source device drops below a determined threshold distance, the disclosure message indicating the current position of each such target device, and the source device, upon receiving the transmitted disclosure message, enables the first entity to spatially avoid each second entity. The source device and the target device do not communicate with each other. In contrast, each of the source device and the target device independently communicates with a respective base transceiver station, BTS, of the cellular network.

The respective BTSs may be either identical or different from and adjacent to each other. Due to a known handover procedure of the cellular network the method even works in case the source device and the target device are located in adjacent radio cells. The handover procedure is efficiently carried out by, e.g., a 5G cellular network using a tracking area code, TAC, logically grouping a plurality of radio cells of a geographical area. The cloud server may use the TAC for excluding target devices arranged in a geographical area having a TAC different from a TAC of a geographical area of the source device, i.e., for preselecting relevant target devices. Of course, different radio access networks, RAN, e.g. Wireless Local Area Networks, WLAN, may also participate in the method.

Due to the cellular network a mutual perception of the source device and the target device is not hindered by an obstacle preventing the second entity from being visually perceived by the first entity. As a consequence, the first entity may perceive the second entity virtually and, above all, earlier than visually.

The source device and the target device on the one hand and the first entity and the second entity on the other hand, respectively, may be freely exchanged. Moreover, the method may be carried out simultaneously by both mobile devices and entities, respectively, i.e., respective mobile devices moving with the first entity and with the second entity may transmit exploration messages to the cloud server.

The source device may be separate from the first entity or form part of the first entity. In the former case, the source device may be operatively coupled to the first entity.

The sector is defined as an angle with the moving direction bisecting the angle. The angle is broad enough to cover extreme trajectories, e.g. hairpin curves. The threshold distance is determined large enough to allow for spatially avoiding a potential collision of the entities.

Enabling the first entity to spatially avoid the second entity may comprise displaying indicated current positions of each second entity on a screen of the source device or on a screen of the first entity and/or accelerating the first entity, the acceleration comprising slowing down, speeding up and/or changing direction. The screen displaying current positions of potentially colliding second entities enables the first entity to take measures adequate for avoiding collisions even before the second entity is visible for the first entity. The screen may form part of the source device or part of the first entity. Of course, the screen may also display an alert when the determined current distance of the target device from the source device falls below a determined alert distance threshold.

The listed measures may be taken by the first entity manually or automatically wherein manual measures typically require a relevant additional reaction time while reaction times of automatic measures typically may be neglected due to a small latency.

The exploration message preferably indicates a current speed of the source device and the cloud server determines the threshold distance dependent on the indicated current speed. The faster the first entity moves the more distant are potentially colliding second entities.

The source device and/or the target device may periodically determine respective current positions by means of a global navigation satellite system, GNSS, and transmit the respectively determined current positions to the cloud server or the cloud server periodically determines respective current positions of the source device and/or the target device by means of triangulation. Both alternatives provide the cloud server with the current positions of the source device and/or the target device. The former alternative requires a GNSS function of the source device and/or the target device to be activated. The GNSS exemplarily comprises a global positioning system, GPS, a Galileo system, a BeiDou/BDS system, a IRNSS/NaviC system, a GLONASS system or a QZSS system. The latter alternative allows the GNSS function to be deactivated and requires the cellular network to determine a position of the target device by measuring respective distances of the target device from at least three BTS.

Exemplarily, the first entity is configured as a vehicle and the source device is configured as a communication unit of the vehicle or as a smartphone separate from the vehicle and arranged within the vehicle. The main application of the method addresses a road traffic. The vehicle may be a car, a bus, a truck, a ship and the like. At least a driver is arranged in the vehicle. However, different applications of the method may involve, as the first entity, a forklift truck or an autonomous transportation vehicle driving within a warehouse and using aisles of the warehouse together with humans. The communication unit is fixed to the vehicle. The smartphone is a mobile device separate from the vehicle. The smartphone may be operatively coupled to the vehicle, e.g., using a wireless connection, preferably a Bluetooth connection. Different such mobile devices may comprise tablets, notebooks, smart devices and the like.

Concerning the exemplary embodiment, the exploration message may indicate a current driving mode of the vehicle and/or a type of the vehicle and the cloud server may determine the threshold distance dependent on the indicated current driving mode and/or the indicated type. The driving mode may define a level of autonomy of the vehicle or a configuration of the vehicle, e.g., economic mode, sport mode and the like. The driving mode may also define an operational state of an anti-lock braking system, ABS, or an autonomous emergency braking system, AES. The type may comprise a model, tires and/or a motorization of the vehicle.

Additionally, the exploration message may indicate a current condition of a road surface and the cloud server may determine the threshold distance dependent on the indicated current condition. The current road condition may comprise a surface material of the road, a temperature of the road and a humidity of the road. The current condition may be indicated as, e.g., "dry solid dirt", "dry loose dirt", "wet solid dirt", "wet loose dirt", "dry leaves", "wet leaves", "pebbles", "split", "dry tarmac", "wet tarmac", "icy tarmac". The current road condition is affected by a weather at the current position of the first entity and affects an efficiency of an acceleration of the vehicle. The cloud server may define a matrix with different driving modes as rows of the matrix and different road conditions as columns of the matrix and determine entries of the matrix dependent on the type of the vehicle.

Each of the transmitted messages favorably has a unique message identifier. The first entity may create the unique message identifier of the exploration message. The cloud server may create the unique message identifier of the disclosure message and the error message, respectively. The unique message identifiers induce a relationship between the messages, e.g., a disclosure message or an error message may refer to an exploration message by comprising the unique message identifier of the disclosure message.

The cloud server may determine the alert distance threshold also dependent on the current speed of the vehicle, the current driving mode of the vehicle, the type of the vehicle and the current road condition.

For instance, the second entity is configured as a person and the target device is configured as a smartphone carried by the person. Again, any mobile device associated with the person may participate in the method as the target device, e.g. a smart toy used by a playing child. Different second entities comprise, e.g., pets wearing a smart collar.

In advantageous embodiments, the source device transmits the exploration message periodically and/or at a frequency varying dependent on a speed of the source device and/or depending on a visibility of the surroundings of the first entity. The periodical transmission allows for periodically updating a screen display of positions of potentially colliding second entities. The varying frequency may increase and decrease, respectively, with a speed of the source device. Thus, a time resolution of the received disclosure message is higher at a higher speed and lower at a lower speed of the source device which corresponds to a higher collision risk at the higher speed as compared with a lower collision risk at the lower speed. For short, transmission of the exploration messages and receipt of the disclosure messages follow the collision risk resulting in a high efficiency of the method. The visibility may also comprise a weather condition, e.g., a fog or a heavy rain at the current position of the vehicle, or a time of day, e.g., a darkness during night. The dependence of the transmission on a visibility reduces a rate of transmitted exploration messages and, hence, a load of the cellular network.

In a favorable embodiment, the cloud server additionally transmits an adequate warn message to the target device, more generally to each target device indicated in the disclosure message, which further reduces a collision risk.

Favorably, the cloud server mirrors user data stored by the home location register, HLR, and/or user data stored by the home subscriber server, HSS. The HLR and the HSS are central databases of the cellular network and form part of the backbone of the cellular network. The mirrored user data provide a redundancy increasing an operative availability of the inventive method.

The cloud server, upon receiving the transmitted exploration message, may transmit an error message to the source device when the disclosure message is adversely affected by a malfunction. The malfunction comprises an inability for transmitting the disclosure message or an erroneous or incomplete content of the disclosure message. For instance, the cloud server may notice an unexpected disconnection of the target device, e.g., due to low batteries by means of missing keep alive messages received from the target device by the cellular network. The error message may cause the first entity to move slower and/or more carefully.

Preferably, each transmitted message is generated according to a dedicated protocol. The dedicated protocol may be referred to as a location exploration message, LEM, protocol. The dedicated protocol may define a structured text, e.g., a text structured according to the eXtensible Markup Language, XML. For instance, the document type definition, DTD, of the LEM protocol may at least allow the following message formats:

The exploration message is formatted as "<LEM><TYPE>Explore</TYPE><ID>...</ID><SELF><POS>...</POS><SPEE D>...</SPEED><DIRECTION>...</DIRECTION><MODE>...</MODE><TYPE>.. .</TYPE><ROAD>...</ROAD></SELF></LEM>" wherein the content of ID is the unique message identifier of the exploration message, the content of POS specifies the current position of the source device, SPEED specifies the current speed of the source device, DIRECTION specifies the current moving direction of the source device, MODE specifies the current driving mode of the first entity, and TYPE specifies the type of the first entity and ROAD specifies the current road condition.

The disclosure message is formatted as "<LEM><TYPE>Disclose</TYPE><ID>...</ID><REF>...</REF><ENTITY><ALE RT/><POS>...</POS></ENTITY></LEM> wherein the content of ID is the unique message identifier of the disclosure message, the content of REF specifies the unique message identifier of a preceding exploration message, POS specifies a position of the target device and ALERT specifies a distance below the determined alert distance threshold. Of course, the disclosure message may have a plurality of ENTITY elements.

The error message is formatted as "<LEM><TYPE>Error</TYPE><ID>...</ID><REF>...</REF><DESCRIPTION>... </DESCRIPTION></LEM>" wherein the content of ID is the unique message identifier of the error message, the content of REF specifies the unique message identifier of a preceding exploration message and the content of DESCRIPTION specifies the error.

The dedicated protocol may be used after respective connections have been established based on a signaling protocol. For instance, signaling system 7, SS#7, or session initiation protocol, SIP, may be applied as the signaling protocol. Preferably a transmission control protocol, TCP,/internet protocol, IP, connection is used for the transmitting messages of the dedicated protocol, as the TCP/IP protocol provides a high reliability.

In an embodiment, an application frontend of a distributed application causes the source device to transmit the exploration message and an application backend of the distributed application causes the cloud server to transmit the disclosure message, the application frontend being executed by the source device and the application backend being executed by the cloud server. The source device and the cloud server may be readily enabled for carrying out the inventive method by installing the application frontend, app for short, and the application backend in the source device and the cloud server, respectively.

A second aspect of the invention is a computer program product, comprising a digital storage medium storing a program code. The digital storage medium comprises a compact disc, CD, a digital versatile disc, DVD, a universal serial bus, USB, stick, a hard drive, HD, a random access memory, RAM, a cloud storage and the like.

According to the invention, the program code causes a computing device to carry out a method according to an embodiment of the invention as the source device or as the cloud server when being read and executed by a processor of the computing device. The computer program product enables the computing device to participate and cooperate in the inventive method as the source device or as the cloud server, the cooperation resulting in a reduced risk of a collision of moving entities.

An essential advantage of the inventive method is that a risk of a collision of moving entities is reduced. Particularly, the inventive method increases a safety of a road traffic. Apart from that, the implementing the inventive method is easy and straightforward.

It shall be understood that the features described previously and to be described subsequently may be used not only in the indicated combinations but also in different combinations or on their own without leaving the scope of the present invention.

The invention is described in detail by means of an exemplary embodiment and with reference to the accompanying drawings. Like components are indicated by like reference numerals throughout the drawings. Therein:

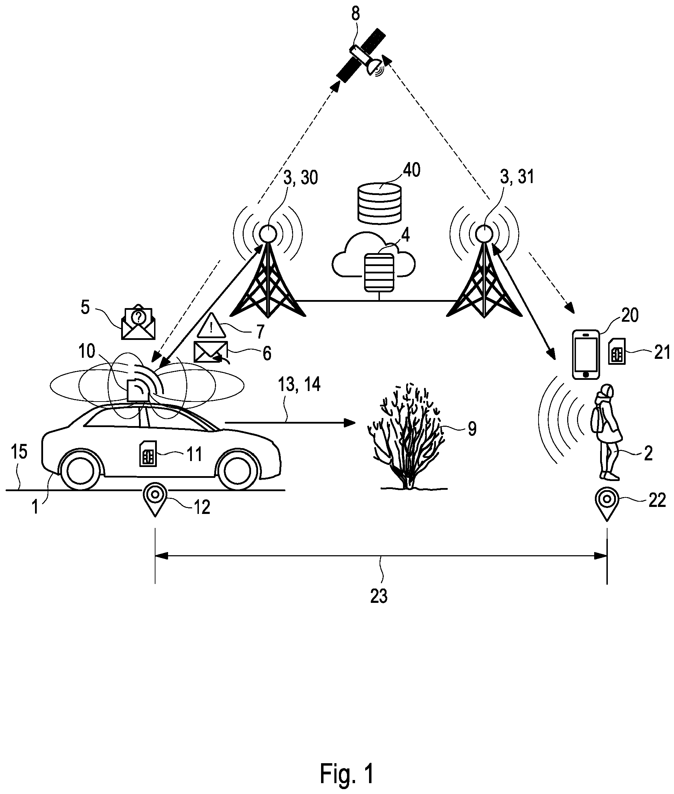

- Fig. 1: schematically shows a diagram of a system configured for carrying out a method according to an embodiment of the invention.

Fig. 1 schematically shows a diagram of a system configured for carrying out a method according to an embodiment of the invention. The system comprises a first entity 1 and a source device 10 associated with the first entity 1. The first entity 1 may be configured as a vehicle. For instance, the source device 10 may be configured as a communication unit of the vehicle or as a smartphone separate from the vehicle and arranged within the vehicle. The source device 10 preferably comprises a subscriber identity module, SIM, 11.

The system further comprises a second entity 2 and a target device 20 associated with the second entity. The second entity 2 may be configured as a person. For instance, the target device 20 may be configured as a smartphone carried by the person. The target device 20 preferably comprises a subscriber identity module, SIM, 21.

The second entity 2 may be hidden from the first entity 1 by a visual obstacle 9, e.g. a bush or a wall.

The system also comprises a cellular network 3 comprising a plurality of base transceiver stations, BTS, 30, 31 and a cloud server 4. Exemplarily, two adjacent base transceiver stations 30, 31 are shown. The cloud server 4 is connected to the cellular network 3 and may be configured as an edge cloud server.

The system particularly comprises an application frontend of a distributed application to be executed by the source device 10 and an application backend of the distributed application to be executed by the cloud server 4. Either of the source device 10 and the cloud server 4 may be implemented by means of a computer program product comprising a digital storage medium storing a program code. The program code causes a computing device to carry out a method as follows according to an embodiment of the invention as the source device 10 and the cloud server 4, respectively, when being read and executed by a processor of the computing device.

The method is for preventing moving entities from colliding. The source device 10 and the target device 20 connect to the cellular network 3. Exemplarily the source device 10 connects to a BTS 30 and the target device 10 connects to a BTS 31 different from and adjacent to the BTS 30. Of course, the source device 10 and the target device 20 may alternatively connect to a single BTS.

The source device 10 and/or the target device 20 may periodically determine respective current positions 12, 22 by means of a global navigation satellite system, GNSS, and transmit the respectively determined current positions 12, 22 to the cloud server 4. Alternatively, the cloud server 4 may periodically determine respective current positions 12, 22 of the source device 10 and/or the target device 20 by means of triangulation.

The source device 10 moving with the first entity 1 wirelessly transmits an exploration message 5 to the cloud server 4 connected to the cellular network 3. The source device 10 may transmit the exploration message 5 periodically and/or at a frequency varying dependent on a speed of the source device 10 and/or depending on a visibility of the surroundings of the first entity 1. Particularly, the application frontend of the distributed application may cause the source device 10 to transmit the exploration message 5, the application frontend being executed by the source device 10.

The exploration message 5 indicates a current moving direction of the source device 10. The exploration message 5 may further indicate a current speed 13 of the source device 10. The exploration message 5 may also indicate a current driving mode of the vehicle and/or a type of the vehicle to the cloud server 4. The exploration message 5 may indicate a current condition of a road surface 15.

Upon receiving the transmitted exploration message 5, the cloud server 4 transmits a disclosure message 6 to the source device 10 when a current position 22 of a target device 20 connected to the cellular network 3 and moving with a second entity 2 is located within a sector about the indicated moving direction 14 and a determined current distance 23 of the target device 20 from the source device 10 drops below a determined threshold distance. The disclosure message 6 indicates the current position 22 of each such target device 20.

Particularly, the application backend of the distributed application may cause the cloud server 4 to transmit the disclosure message 6, the application backend being executed by the cloud server 4. The cloud server 4 may mirror user data 40 stored by the home location register, HLR, and/or user data 40 stored by the home subscriber server, HSS.

Upon receiving the transmitted exploration message 5, the cloud server 4 may transmit an error message 7 to the source device 10 when the disclosure message 6 is adversely affected by a malfunction.

The cloud server 4 may determine the threshold distance dependent on the indicated current speed 13. The cloud server 4 may further determine the threshold distance dependent on the indicated current driving mode and/or the indicated type. The cloud server 4 may also determine the threshold distance dependent on the indicated current condition of the road surface 15.

Upon receiving the transmitted disclosure message 6, the source device 10 enables the first entity 1 to spatially avoid each second entity 2. Enabling the first entity 1 to spatially avoid the second entity 2 may comprise displaying indicated current positions 22 of each second entity 2 on a screen of the source device 10 or on a screen of the first entity 1 and/or accelerating the first entity 1, the acceleration comprising slowing down, speeding up and/or changing direction.

Each transmitted message 5, 6, 7 is preferably generated according to a dedicated protocol. The dedicated protocol may be used after respective connections have been established based on a signaling protocol.

### Reference Numerals

- 1: first entity
- 10: source device
- 11: SIM
- 12: position
- 13: speed
- 14: moving direction
- 15: road surface
- 2: second entity
- 20: target device
- 21: SIM
- 22: position
- 23: distance
- 3: cellular network
- 30: BTS
- 31: BTS
- 4: cloud server
- 40: user data
- 5: exploration message
- 6: disclosure message
- 7: error message
- 8: GNSS
- 9: visual obstacle

## Claims

1. A method for preventing moving entities from colliding, wherein
- a source device (10) moving with a first entity (1) and connected to a cellular network (3) wirelessly transmits an exploration message (5) to a cloud server (4) connected to the cellular network (3), the exploration message (5) indicating a current moving direction of the source device (10);
- the cloud server (4), upon receiving the transmitted exploration message (5), transmits a disclosure message (6) to the source device (10) when a current position (22) of a target device (20) connected to the cellular network (3) and moving with a second entity (2) is located within a sector about the indicated moving direction (14) and a determined current distance (23) of the target device (20) from the source device (10) drops below a determined threshold distance, the disclosure message (6) indicating the current position (22) of each such target device (20);
- the source device (10), upon receiving the transmitted disclosure message (6), enables the first entity (1) to spatially avoid each second entity (2).

2. The method according to claim 1, wherein enabling the first entity (1) to spatially avoid the second entity (2) comprises displaying indicated current positions (22) of each second entity (2) on a screen of the source device (10) or on a screen of the first entity (1) and/or accelerating the first entity (1), the acceleration comprising slowing down, speeding up and/or changing direction.

3. The method according to one of claim 1 or 2, wherein the exploration message (5) indicates a current speed (13) of the source device (10) and the cloud server (4) determines the threshold distance dependent on the indicated current speed (13).

4. The method according to one of claims 1 to 3, wherein the source device (10) and/or the target device (20) periodically determine respective current positions (12, 22) by means of a global navigation satellite system, GNSS, and transmit the respectively determined current positions (12, 22) to the cloud server (4) or the cloud server (4) periodically determines respective current positions (12, 22) of the source device (10) and/or the target device (20) by means of triangulation.

5. The method according to one of claims 1 to 4, wherein the first entity (1) is configured as a vehicle and the source device (10) is configured as a communication unit of the vehicle or as a smartphone separate from the vehicle and arranged within the vehicle.

6. The method according to claim 5, wherein the exploration message (5) indicates a current driving mode of the vehicle and/or a type of the vehicle and the cloud server (4) determines the threshold distance dependent on the indicated current driving mode and/or the indicated type.

7. The method according to claim 5 or 6, wherein the exploration message (5) indicates a current condition of a road surface (15) and the cloud server (4) determines the threshold distance dependent on the indicated current condition.

8. The method according to one of claims 1 to 7, wherein the second entity (2) is configured as a person and the target device (20) is configured as a smartphone carried by the person.

9. The method according to one of claims 1 to 8, wherein the source device (10) transmits the exploration message (5) periodically and/or at a frequency varying dependent on a speed of the source device (10) and/or depending on a visibility of the environment of the first entity (1).

10. The method according to one of claims 1 to 9, wherein the cloud server (4) mirrors user data (40) stored by the home location register, HLR, and/or user data (40) stored by the home subscriber server, HSS.

11. The method according to one of claims 1 to 10, wherein the cloud server (4), upon receiving the transmitted exploration message (5), transmits an error message (7) to the source device (10) when the disclosure message (6) is adversely affected by a malfunction.

12. The method according one of claims 1 to 11, wherein each transmitted message (5, 6, 7) is generated according to a dedicated protocol.

13. The method according to claim 12, wherein the dedicated protocol is used after respective connections have been established based on a signaling protocol.

14. The method according to one of claims 1 to 13, wherein an application frontend of a distributed application causes the source device (10) to transmit the exploration message (5) and an application backend of the distributed application causes the cloud server (4) to transmit the disclosure message (6), the application frontend being executed by the source device (10) and the application backend being executed by the cloud server (4).

15. A computer program product, comprising a digital storage medium storing a program code, the program code causing a computing device to carry out a method according to one of claims 1 to 14 as the source device (10) or as the cloud server (4) when being read and executed by a processor of the computing device.
